# EUROPÄISCHE PATENTSCHRIFT

(11) **EP 1 144 170 B1**
(45) Veröffentlichungstag und Bekanntmachung des Hinweises auf die Patenterteilung: **26.06.2002**
(21) Anmeldenummer: 00901092.7
(22) Anmeldetag: 12.01.2000
(51) Int. Cl.: B29B 13/02, B29C 65/16, B29C 65/74, B65B 7/14, B29C 57/10, B65B 51/10

(54) **VORRICHTUNG ZUM VERSCHWEISSEN DES ENDES VON ROHRARTIGEN BEHÄLTERN AUS KUNSTSTOFF, INSBESONDERE VON TUBEN**
DEVICE FOR WELDING TOGETHER THE ENDS OF TUBULAR PLASTIC CONTAINERS, NOTABLY TUBES
DISPOSITIF POUR SOUDER L'EXTREMITE DE CONTENANTS TUBULAIRES EN MATIERE PLASTIQUE, NOTAMMENT DE TUBES

(30) Priorität: 19.01.1999 DE 29900811 U
(43) Veröffentlichungstag der Anmeldung: 17.10.2001
(73) Patentinhaber: Iwka Pacunion GmbH, 76297 Stutensee (DE)
(72) Erfinder: SATOR, Alexander, P., D-22525 Hamburg (DE)
(74) Vertreter: Lasch, Hartmut Dipl.-Ing.
(86) Internationale Anmeldenummer: EP0000168
(87) Internationale Veröffentlichungsnummer: WO0043183

(56) Entgegenhaltungen:
- DE-A- 3 401 959
- DE-A- 4 425 861
- DE-U- 29 712 264
- US-A- 4 550 238

## Beschreibung

Die Erfindung bezieht sich auf eine Vorrichtung zum Verschweißen des Endes von rohrartigen Behältern aus Kunststoff, insbesondere von Tuben, nach dem Anspruch 1.

Zahlreiche fließfähige oder pastöse Medien werden in Tuben verpackt, z.B. Kosmetika, Zahnpasta, Schuhcreme, Salben und dergleichen. Die Tuben können aus geeignetem metallischem Flachmaterial geformt sein, das plastisch verformbar ist. Seit längerer Zeit wird - hauptsächlich aus ökonomischen Gründen - Kunststoffmaterial verwendet.

Vor dem Abdichten des Endes des Vorformlings eines tubenartigen Behälters wird dieser zunächst mit dem aufzunehmenden Material gefüllt. Die Entnahmeseite ist durch eine geeignete Kappe, einen Schraubverschluß oder dergleichen abgeschlossen. Nach dem Befüllen erfolgt das Verschließen des Einfüllendes. Bei plastisch verformbarem Flachmaterial ist bekannt, das Einfüllende entlang einer Linie zu falten. Gegebenenfalls findet eine linienartige Verpressung im Endbereich statt. Damit ist eine ausreichende Dichtigkeit gewährleistet. Bei Kunststoffmaterial ist ein derartiges Verfahren nicht anwendbar. Vielmehr ist es erforderlich, daß das aufeinandergelegte Ende verschweißt oder versiegelt wird.

Ein aus der DE 37 44 402 C2 bekanntes Verfahren zum Verschließen von tubenartigen Behältern aus Kunststoffmaterial sieht vor, den Endabschnitt zunächst in geeigneter Weise durch Einwirkung von Wärme oder dergleichen zu erweichen oder anzuschmelzen, bevor mit Hilfe einer Preßvorrichtung eine dichtende Naht hergestellt wird.

Das Erweichen wird dadurch herbeigeführt, daß ein Ring um das Einfüllende herum angeordnet wird, der mit einer Reihe von Düsenöffnungen versehen ist, über die heiße Luft auf die Außenwandung des Einfüllendes der Tube geblasen wird. Da im Regelfall eine komplette Verschweißung erforderlich ist, muß erhebliche Wärme von außen zugeführt werden, d.h. bis zu ca. 18 kW elektrische Leistung. Dieses Verfahren wird heutzutage in der Verpackungsindustrie eingesetzt und ist unter der Bezeichnung "Hot-Air"-Verfahren bekannt.

Es ist ferner bekannt, apparativ analog zum Heißluftverfahren mit Hilfe von Ultraschall oder Mikrowellenbestrahlung eine Erweichung bzw. Anschmelzung des zu verschweißenden Endes vorzunehmen.

Bei allen Methoden ist es erforderlich, die Anschmelzung und die nachfolgende Verpressung in nacheinanderfolgenden Produktionstakten durchzuführen, da die Vorrichtung zum Anschmelzen des Materials räumlich nicht in Einklang mit der Verpressungsvorrichtung gebracht werden kann. Zusätzlich ist es zumeist notwendig, die zuerst aufgeheizten Tuben nach dem Verpressen wieder abzukühlen, da sonst eine ungewollte plastische Verformung entstehen und zusätzlich das Produkt durch die Wärmebeeinflussung beeinträchtigt werden kann. Aufgrund dieses zusätzlichen Kühlungsaufwandes ist dieses Verfahren außerordentlich unökonomisch.

Aus DE 22 61 388 ist ein Verfahren zum Anschweißen eines Endstücks aus Kunststoff an einem rohrförmigen Kunststoffkörper bekanntgeworden, bei dem das Endstück mit einem rohrartigen Abschnitt in den rohrartigen Körper eingesetzt wird. Mit Hilfe eines Lasers wird auf der Außenseite des rohrartigen Körpers eine Bestrahlung vorgenommen, wobei das Rohr mit dem Endstück rotiert. Eine Anpreßrolle preßt den erwärmten Bereich zusammen und bewirkt eine Art Verschweißung.

Der Erfindung liegt die Aufgabe zugrunde, ein Verfahren und eine Vorrichtung zum Verschweißen der Enden von rohrartigen Behältern, insbesondere von Tuben, zu schaffen, die für alle gebräuchlichen Kunststoffarten für Tuben einzusetzen ist, die einen geringen Energieverbrauch aufweist, eine hohe Produktionsgeschwindigkeit gewährleistet und mit einfachen Mitteln erstellt werden kann.

Diese Aufgabe wird durch die Merkmale des Patentanspruchs 1 gelöst.

Bei der erfindungsgemäßen Vorrichtung ist eine, vorzugsweise segmentierte Halterung vorgesehen für eine Mehrzahl von Laserdiodeneinheiten, die annähernd im Kreis angeordnet sind, so daß ihre Strahlen entweder direkt oder über eine Umlenkoptik auf die Außen- oder Innenwand des Behälters auftreffen.

Da die Wellenlänge von Diodenlasern im nahen Infrarot (ca. 650 nm bis 1400 nm) liegt, ist es für die Effektivität der Vorrichtung unerheblich, ob die Innen- oder die Außenwand des Behälters bestrahlt wird, da fast alle in Frage kommenden Kunststoffe teilabsorptiv sind und die Strahlung somit über die gesamte Wandstärke (< 1 mm) gleichmäßig umsetzen können. Zur Vereinfachung des mechanischen Aufbaus ist die Bestrahlung auf die Außenwand vorzuziehen. Somit ist auch bei einer Bestrahlung auf die Außenwand die Anschmelzung der zur Verpressung relevanten Innenwand gewährleistet. Das mit der Erfindung betriebene Verfahren erreicht eine homogene Durchwärmung der Verschmelzungszone. Zur Verbesserung des Wirkungsgrades ist es auch möglich, an der den Laserdioden gegenüberliegenden Seite innerhalb des Behälters einen Reflektor anzubringen, der die nicht absorbierte Strahlung in das Material zurückstrahlt.

Naturgemäß ist der Strahl einer Laserdiode oder eines Laserdiodenarrays stark divergent, im Regelfall im Bereich von ca. 6-10° in der Ebene der Längsausdehnung der Laserdioden(langsame Achse) und ca. 35-40° perpendikular zur Längsdehnung bzw. in der Ebene der Querausdehnung der Laserdioden (schnelle Achse). Dieser Umstand läßt sich bei der erfindungsgemäßen Vorrichtung teilweise ausnutzen. Zur nahtlosen Aneinanderreihung der Laserstrahlprojektionen auf dem Umfang des Behälters kann angenommen werden, daß die schnelle perpendikulare Achse der Laserstrahlung (ca. 10°) den radialen Abstand der auf einem Kreis im radialen Abstand zum Behälter angeordneten Laserdiodeneinheiten vorgibt. Zur Erreichung einer in Umfangsrichtung kontinuierlichen Bestrahlung sollte vom Wert des parallelen Abstrahlwinkels in der schnellen Achse ca. 0,2° subtrahiert werden.

Um eine ausreichende Leistungsdichte zu erreichen - nach bisherigen Erfahrungen sollte die Leistungsdichte > 20 W/cm² betragen - ist es zweckmäßig, die Strahlung der Laserdioden zu fokussieren. Zur Erreichung der Leistungsdichte wird z.B. die langsame Achse der Laserdiodeneinheit stark fokussiert. Ein Fokus von ca. 0,5 mm ist ohne besonderen Aufwand erreichbar. Die in Umfangsrichtung des Behälters abgestrahlte Laserstrahlung wird hingegen z.B. nur schwach fokussiert, um die Abstrahlcharakteristik anzupassen. Eine optimale Fokussierung könnte somit wie folgt aussehen: Die langsame Achse wird auf ca. 0,5 mm fokussiert. Die schnelle Achse wird nicht fokussiert und behält einen Abstrahlwinkel von ca. 45° bei. Somit wird von einer Laserdiodeneinheit auf dem Umfang des Tubenkörpers ein Umfangsflächenabschnitt von 0,5 mm x 45° bestrahlt. Bei einem Tubendurchmesser von 25 mm entsprechen 40° 9,8 mm. Das ergibt eine Bestrahlungsfläche von 4,9 mm². Bei einer Laserausgangsleistung von 20 W ergibt dies eine Leistungsdichte von ca. 40 W/cm².

Zur Anpassung des Fokus der Laserstrahlung an die Krümmung der zylindrischen Oberfläche kann eine asphärische Linse eingesetzt werden. Zur Vermeidung dieser Problematik kann allerdings auch die Anzahl der Laserdiodeneinheiten so erhöht werden, daß der "Depth of Focus" zum Ausgleich der Krümmung ausreicht. Daher wird die schnelle Abstrahlachse so fokussiert, daß ein Abstrahlwinkel von nunmehr 10° erreicht wird. Entsprechend führen 10° auf der Oberfläche des rohrartigen Behälters zu einem geringeren Kümmungswert, der unter Umständen optisch nicht mehr weiter ausgeglichen werden muß.

Die mechanische Positionierung der Laserdiodeneinheiten ist ebenfalls abhängig von der Fokussierung. Mit wachsendem Umfang des Behälters ändert sich zwangsläufig die relative Positionierung der Laserdiodeneinheiten zueinander. Dabei sinkt verhältnismäßig die Leistungsdichte auf der Behälterwand. Um diesem Absinken der Leistungsdichte entgegenzuwirken, können auch für diesen Fall die Laserdiodeneinheiten in einem gegenseitigen Abstand angeordnet werden, der nur einem Bruchteil des Abstrahlwinkels in der schnellen Achse entspricht. Dies verringert, wie bereits oben angeführt, die Problematik der Krümmung der Behälteroberfläche.

Bei einer einfacheren Konfiguration können die Laserdiodeneinheiten entsprechend ihrer normalen Abstrahlcharakteristik angeordnet werden (daher ca. 45° perpendikulare Abstrahlwinkel). Das entspricht in diesem Fall acht Laserdiodeneinheiten, die um die Achse des Behälters angeordnet werden können. Zur Erhöhung der Leistungsdichte der vorgenannten Konfiguration auf 200 % ist es notwendig, den Achsenabstand der Laserdiodeneinheiten auf einen Winkel von ca. 22,5° zu verringern.

Zur Anpassung an den Durchmesser des rohrartigen Behälters oder auch zur Veränderung der Energiedichte am Auftreffort sieht eine Ausgestaltung der Erfindung vor, daß die Laserdiodeneinheiten in Richtung ihrer Längsachse verstellbar angeordnet sind. Entsprechend ist eine geeignete Verstellvorrichtung ausgelegt und gestaltet, um die Verstellung der Laserdiodeneinheiten zu bewerkstelligen.

Zur Lagerung und Verstellung der Laserdiodeneinheiten kann eine kreis- bzw. ringförmige Konstruktion eingesetzt werden, die aus einzelnen Segmenten besteht, von denen jedes eine Laserdiode hält. Die Anzahl der Segmente entspricht somit der Anzahl der Laserdiodeneinheiten. Jedes Segment kann einzeln in der Längsachse verstellbar gelagert sein. Alle Segmente können gemeinsam auf einem ringförmigen Träger angeordnet werden.

Nach einer weiteren Ausgestaltung der Erfindung ist vorgesehen, daß die Halterung für alle Segmente in der Höhe verstellbar ist. Dadurch läßt sich die Lage des Auftreffortes an der Außenwand des Behälters verändern.

Statt der vorgenannten Laserdiodeneinheiten können analog auch fasergekoppelte Diodenlaser oder Faserlaser eingesetzt werden. Je nach Lasertyp muß die Austrittsoptik angepaßt werden.

Die Erfindung wird anhand von in Zeichnungen dargestellten Ausführungsbeispielen näher erläutert.
- Fig. 1: zeigt die Draufsicht auf eine schematisch dargestellte Vorrichtung nach der Erfindung.
- Fig. 2: zeigt einen Schnitt durch die Darstellung nach Fig. 1 entlang der Linie 2-2.
- Fig. 3: zeigt eine alternative Ausführungsform zu der nach Fig. 2.
- Fig. 4: zeigt schematisch die Draufsicht auf eine Diodenlasereinheit für die Vorrichtung nach der Erfindung.
- Fig. 5: zeigt die Seitenansicht der Laserdiodeneinheit nach Fig. 4.

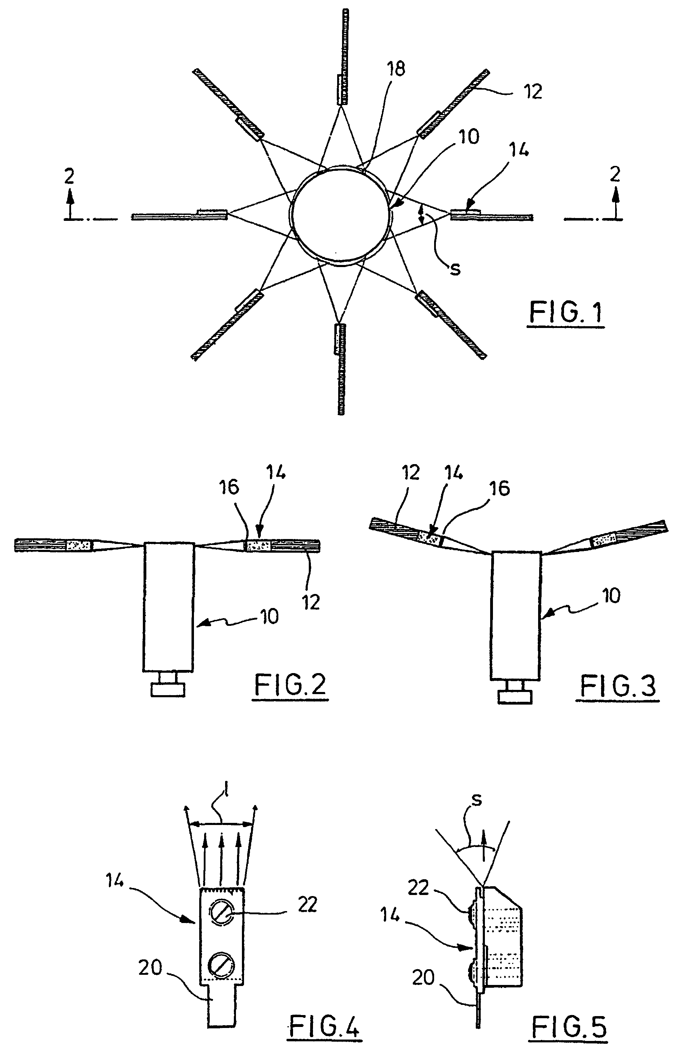

In Fig. 1 und 2 ist ein tubenartiger Behälter 10 dargestellt, der aus relativ dünnwandigem Kunststoffmaterial besteht. Der Behälter ist unten geschlossen und oben offen. Das offene Ende soll verschweißt werden, indem es zwischen zwei linear bewegten Backen zusammengepreßt wird zur Bildung einer quer verlaufenden länglichen Versiegelungsnaht. Zu diesem Zweck ist erforderlich, das geeignete Kunststoffmaterial, aus dem der Behälter 10 besteht, zu erweichen. Die Erweichung geschieht mit Hilfe von Laserstrahlen der in den Fig. 1 und 2 dargestellten Vorrichtung.

In Fig. 1 sind acht längliche Haltesegmente 12 dargestellt, die, wie sich aus Fig. 2 ergibt, in einer Ebene liegen, die etwas unterhalb des oberen Endes des tubenartigen Behälters 10 senkrecht zu dessen Achse sich erstreckt. Die Haltesegmente 12 halten an dem dem Behälter 10 zugewandten Ende Diodenlaser 14. In Fig. 2 ist zu erkennen, daß jedem Diodenlaser 14 eine Mikrolinse 16 vorgeordnet ist. In Umfangsrichtung des Behälters 10 gesehen weisen die Laser 14 einen Abstrahlwinkel S von etwa 45° auf. Die Anordnung der Laser 14 bzw. der Haltesegmente 12 ist derart, daß jeder bestrahlte Umfangsbereich so liegt, daß sie benachbart aneinander geringfügig überlappen, wie bei 18 gezeigt. Die Diodenlaser 14 haben bekanntlich einen schmalen langgestreckten Austrittsbereich. Sie sind daher so angeordnet, daß die Längserstreckung des Austrittsbereichs parallel zur Behälterachse verläuft. Die Abstrahlung in dieser Richtung weist jedoch einen geringeren Winkel auf, z.B. 10°. Die Achse, in der die geringeren Abstrahlwinkel erreicht werden, wird auch als langsame Achse bezeichnet, während die Achse senkrecht dazu, d.h. in Querrichtung zur Längsachse, als die schnelle Achse bezeichnet wird. Mit anderen Worten, die langsame Achse des Lasers 14 ist parallel zur Behälterachse und die schnelle Achse quer dazu.

Im gezeigten Beispiel wird z.B. nur die langsame Achse fokussiert, wie in Fig. 2 dargestellt, während die schnelle Achse unfokussiert bleibt.

Die Haltesegmente 12 können auf einer nicht gezeigten ringartigen Halterung gemeinsam angebracht werden, wobei die Haltesegmente mit Hilfe einer ebenfalls nicht gezeigten Verstellvorrichtung in Längsrichtung hin- und herbewegbar sind, um den radialen Abstand zum Umfang des Behälters 10 zu verändern. Ferner kann die nicht gezeigte ringartige Halterung höhenverstellbar sein in der Weise, daß der Auftreffort der Laserstrahlen am Umfang des Behälters 10 in Längsrichtung verändert werden kann.

In Fig. 3 ist gezeigt, daß die Haltesegmente 12 auch in einem Winkel ungleich 90° zur Achse des Behälters 10 angeordnet sein können. Die Gesamtheit der Haltesegmente 12 bzw. der Laser 14 ist mithin auf einer Kegelringscheibe angeordnet zu denken.

In den Fig. 4 und 5 ist die Lasereinheit 14 etwas näher dargestellt. Man erkennt das Anschlußblech 20 und die Schrauben 22 zur Verbindung des Lasers mit der Platte 20. In Fig. 4 ist der Abstrahlwinkel 1 gezeigt, der in der langsamen Achse erzeugt wird. In Fig. 5 ist noch einmal der Winkel s in der schnellen Achse dargestellt. Während ersterer etwa 10° beträgt, kann letzterer zwischen 35° und 45° betragen. Die Verbindung einer Diodenlasereinheit nach den Fig. 4 und 5 mit einem Haltesegment 12 ist nicht dargestellt.

## Patentansprüche

1. Vorrichtung zum Verschweißen des Endes von rohrartigen Behältern aus Kunststoff, insbesondere von Tuben, mit einer Haltevorrichtung, die den Behälter mit nach oben weisender Öffnung stationär hält und Mitteln zum Erwärmen eines ringförmigen Umfangbereichs des Behälters nahe der Öffnung zwecks nachfolgender Verschweißung entlang einer länglichen quer zur Längserstreckung des Behälters verlaufenden Naht, **dadurch gekennzeichnet, daß** an einer Halterung (12) eine Mehrzahl von Diodenlasern (14) annähernd auf einem Kreis angeordnet sind derart, daß ihre Strahlen entweder direkt oder über eine Umlenkoptik auf die Innen- oder Außenwand des Behälters (10) auftreffen.

2. Vorrichtung nach Anspruch 1, **dadurch gekennzeichnet, daß** die Diodenlaser (14) in gleichmäßigem Winkelabstand angeordnet sind.

3. Vorrichtung nach Anspruch 1 oder 2, **dadurch gekennzeichnet, daß** die Diodenlaser (14) oder ihre Halter (12) in Richtung ihrer Längsachse verstellbar angeordnet sind.

4. Vorrichtung nach Anspruch 3, **dadurch gekennzeichnet, daß** den Diodenlasern oder ihren Haltern eine Verstellvorrichtung zugeordnet ist zur einzelnen oder gemeinsamen Verstellung der Diodenlaser.

5. Vorrichtung nach einem der Ansprüche 1 bis 4, **dadurch gekennzeichnet, daß** die Diodenlaser oder ihre Halter einzeln oder gemeinsam in der Höhe verstellbar sind.

6. Vorrichtung nach einem der Ansprüche 1 bis 5, **dadurch gekennzeichnet, daß** jedem Diodenlaser (14) ein radial angeordneter Halter (12) zugeordnet ist und die Halter (12) auf einer gemeinsamen ringförmigen Haltevorrichtung angebracht sind.

7. Vorrichtung nach einem der Ansprüche 1 bis 6, **dadurch gekennzeichnet, daß** die Diodenlaser (14) bezüglich der Achse des Behälters (10) so angeordnet sind, daß ihre langsame Achse parallel zur Behälterachse verläuft.

8. Vorrichtung nach Anspruch 7, **gekennzeichnet durch** eine dem Diodenlaser (14) vorgeordnete Optik (16), welche den Laserstrahl in der langsamen Achse fokussiert.

9. Vorrichtung nach Anspruch 7 oder 8, **gekennzeichnet durch** eine dem Diodenlaser (14) vorgeordnete Optik (16), welche den Laserstrahl in der schnellen Achse fokussiert.

10. Vorrichtung nach einem der Ansprüche 7 bis 9, **dadurch gekennzeichnet, daß** zur Anpassung an die Krümmung des Behälters (10) eine asphärische Linse dem Diodenlaser vorgeordnet ist.

11. Vorrichtung nach einem der Ansprüche 8 bis 10, **dadurch gekennzeichnet, daß** die Optik entlang der optischen Achse relativ zum Diodenlaser verstellbar angeordnet ist.

12. Vorrichtung nach einem der Ansprüche 1 bis 11, **dadurch gekennzeichnet, daß** im Inneren des Behälters ein Reflektor angeordnet ist, der die von der Wandung des Behälters nicht absorbierte Strahlung auf die Wandung zurückwirft.

## Claims

1. Device for welding an end of tubular containers made from plastic, in particular tubes, with a support device to hold the container in a stationary fashion with the opening therein facing in the upward direction, and with means for warming a ring shaped peripheral region of the container proximate the opening to facilitate subsequent welding along an elongated seam travelling transverse to the longitudinal extension of the container, **characterized in that** a plurality of diode lasers (14) are disposed on a support (12) in an approximately circular manner and in such a fashion that their radiation is incident on the inner or outer wall of the container (10) either directly or via a deflection optics.

2. Device according to claim 1, **characterized in that** the diode lasers (14) are disposed at regular angular separations.

3. Device according to claim 1 or 2, **characterized in that** the diode lasers (14) or their supports (12) can be adjusted along their longitudinal axes.

4. Device according to claim 3, **characterized in that** the diode lasers or their supports have an associated adjustment device for individual or common adjustment of the diode lasers.

5. Device according to any one of the claims 1 through 4, **characterized in that** the heights of the diode lasers or their supports can be adjusted individually or collectively.

6. Device according to any one of the claims 1 through 5, **characterized in that** each diode laser (14) has an associated radially disposed support (12) and the supports (12) are disposed on a common ring shaped holding device.

7. Device according to any one of the claims 1 through 6, **characterized in that** the diode lasers (14) are disposed relative to the axis of the container (10) in such a fashion that their slow axes are parallel to the container axis.

8. Device according to claim 7, **characterized by** an optics (16) disposed in front of the diode laser (14) for focusing the laser beam in the slow axis.

9. Device according to claim 7 or 8, **characterized by** an optics (16) disposed in front of a diode laser (14) for focusing the laser beam in the fast axis.

10. Device according to any one of the claims 7 through 9, **characterized by** an aspherical lens disposed in front of the diode laser to adjust to the curvature of the container (10).

11. Device according to any one of the claims 8 through 10, **characterized in that** the optics can be adjusted, relative to the diode laser, along the optical axis.

12. Device according to any one of the claims 1 through 11, **characterized by** a reflector disposed inside the container to reflect the light not absorbed by the wall of the container back onto the wall.

## Revendications

1. Dispositif pour souder l'extrémité de contenants tubulaires en matière plastique, notamment de tubes, comprenant un dispositif d'immobilisation maintenant le contenant en place, ouverture dirigée vers le haut, et des moyens pour chauffer une zone périmétrique circulaire du contenant à proximité de l'ouverture en vue du soudage consécutif le long d'une ligne de joint s'étendant transversalement par rapport à la direction longitudinale du contenant, **caractérisé en ce qu'**une pluralité de diodes-lasers (14) sont disposées sensiblement en un cercle sur un support (12) de sorte que leurs rayons frappent soit directement soit par l'intermédiaire d'un instrument optique de déviation la paroi intérieure ou extérieure du contenant (10).

2. Dispositif selon la revendication 1, **caractérisé en ce que** les diodes-lasers (14) sont disposées à écarts angulaires constants.

3. Dispositif selon la revendication 1 ou 2, **caractérisé en ce que** les diodes-lasers (14) ou leurs supports (12) sont montés réglables dans le sens de leur axe longitudinal.

4. Dispositif selon la revendication 3, **caractérisé en ce que** l'on associe aux diodes-lasers ou à leurs supports un dispositif de réglage pour régler les diodes-lasers individuellement ou globalement.

5. Dispositif selon l'une quelconque des revendications 1 à 4, **caractérisé en ce que** les diodes-lasers ou leurs supports sont réglables en hauteur individuellement ou globalement.

6. Dispositif selon l'une quelconque des revendications 1 à 5, **caractérisé en ce qu'**à chaque diode-laser (14) est associé un support (12) disposé radialement et **en ce que** les supports (12) sont fixés sur un dispositif commun annulaire de maintien.

7. Dispositif selon l'une quelconque des revendications 1 à 6, **caractérisé en ce que** les diodes-lasers (14) sont disposées par rapport à l'axe du contenant (10) de telle manière que leur axe lent s'étend parallèlement à l'axe du contenant.

8. Dispositif selon la revendication 7, **caractérisé par** un instrument optique (16) disposé devant la diode-laser (14) mettant au point le rayon laser dans l'axe lent.

9. Dispositif selon la revendication 7 ou 8, **caractérisé par** un instrument optique (16) disposé devant la diode-laser (14) mettant au point le rayon laser dans l'axe rapide.

10. Dispositif selon l'une quelconque des revendications 7 à 9, **caractérisé en ce que** l'on dispose une lentille asphérique devant la diode-laser pour l'adaptation à la courbure du contenant (10).

11. Dispositif selon l'une quelconque des revendications 8 à 10, **caractérisé en ce que** l'instrument optique est disposé réglable le long de l'axe optique par rapport à la diode-laser.

12. Dispositif selon l'une quelconque des revendications 1 à 11, **caractérisé en ce qu'**à l'intérieur du contenant est disposé un réflecteur réfléchissant sur la paroi le rayonnement non absorbé par la paroi du contenant.
